# EUROPÄISCHE PATENTSCHRIFT

(11) **EP 1 306 747 B1**
(45) Veröffentlichungstag und Bekanntmachung des Hinweises auf die Patenterteilung: **15.03.2006**
(21) Anmeldenummer: 02102468.2
(22) Anmeldetag: 21.10.2002
(51) Int. Cl.: G06F 5/06, G06F 13/42

(54) **Schaltung zur Signalübertragung zwischen endlichen Automaten unterschiedlicher Taktfrequenz**
Circuitry for signal transmission between state machines operating at different clock frequencies
Circuit pour transmission de signaux entre machines à état fini fonctionnant en fréquences différentes

(30) Priorität: 23.10.2001 DE 10152195
(43) Veröffentlichungstag der Anmeldung: 02.05.2003
(73) Patentinhaber: Koninklijke Philips Electronics N.V., 5621 BA Eindhoven (NL)
(72) Erfinder: Gelke, Hans Joachim, 52088 Aachen (DE); Gappisch, Steffen, 52088 Aachen (DE); Koch, Stephan, 52088 Aachen (DE)
(74) Vertreter: Volmer, Georg

(56) Entgegenhaltungen:
- US-A- 5 555 213
- B. JÜNGER: "Mikrorechnergesteuerte Kommunikationsbaugruppe für ein lokales Feldbusnetz" 6. Juni 1988 (1988-06-06) , UNIVERSITÄT KARLSRUHE , KARLSRUHE XP002225581 * Seite 32 - Seite 33, Absatz 2 * * Abbildung 2.7 * * Seite 35, Absatz 3 * * Abbildung 2.9 *
- TIETZE/SCHENK: "Halbleiter-Schaltungstechnik" 1999 , SPRINGER VERLAG , BERLIN XP002225582 * Seite 709, Absatz 2; Abbildung 9.44 *

## Beschreibung

Die Erfindung betrifft eine Schaltungsanordnung zur Signalübertragung von einer bei einer ersten Taktfrequenz betreibbaren Finite-State-Maschine zu einer bei einer zweiten Taktfrequenz betreibbaren Finite-State-Maschine .

Der Begriff Finite-State-Maschine bezeichnet hier allgemein eine digitale Schaltung, die in Abhängigkeit von Eingangssignalen, Bedingungen und Ereignissen eine begrenzte Anzahl von Zuständen annehmen kann.

Aufgrund der fortschreitenden Miniaturisierung von Halbleiterchips in Siliziumtechnologie ist es möglich mehrere Finite-State-Maschinen, die jeweils selbstständige Systeme darstellen, auf einem einzigen Chip zu integrieren. Dabei wird es immer wichtiger, das richtige Verhältnis zwischen dem Energieverbrauch und der Rechenkapazität zu wählen. Viele Geräte besitzen daher mehrere Finite-State-Maschinen, die mit unterschiedlichen Taktfrequenzen betrieben werden. Beispielsweise kann bei einem Mobilfunkgerät der digitale Sprachprozessor (DSP) mit einer hohen Taktfrequenz laufen, während ein Systemcontroller, der unter anderem die Tastaturabfrage übernimmt, mit einer niedrigeren Taktfrequenz betrieben werden kann. Allerdings müssen diese mit unterschiedlichen Taktfrequenzen laufenden Systeme in der Lage sein, miteinander zu kommunizieren und Signale zu übertragen oder auszutauschen. Es ist daher erforderlich, die Signale zu synchronisieren.

Bei der Kommunikation zwischen Systemen, die unterschiedliche Taktfrequenzen aufweisen, besteht die Gefahr, dass ein von dem schnelleren System gesendetes Signal von dem langsameren System nicht erkannt wird, da dessen Abtastrate zu klein ist. Um hier Abhilfe zu schaffen, werden bei bekannten Systemen zumeist zwei Synchronisationsstufen zwischen den Finite-State-Maschinen verwendet. Allerdings verursacht jede Synchronisationsstufe eine Verzögerung und einen Geschwindigkeitsverlust.

Es sind bereits Systeme bekannt, die mit unterschiedlichen Taktfrequenzen betrieben werden können. Dabei entsteht das Problem, dass nicht eindeutig vorhersehbar ist, welche der beiden Finite-State-Maschinen die schnellere ist. In diesen Fällen müssen daher Synchronisationsstufen für beide Richtungen vorgesehen werden, sodass die Signalübertragung durch ein Handshaking Verfahren erfolgen kann. Diese Variante erfordert einen erhöhten Bauaufwand und führt zu einem weiteren Leistungsverlust.

Aus der Diplomarbeit von B. Jünger an der Universität Karlsruhe mit dem Titel "Mikrorechnergesteuerte Kommunikationsbaugruppe für ein lokales Feldbusnetz" ist eine Erweiterungskarte für eine Speicher-programmierbare Steuerung bekannt, wobei die Schaltungen der Erweiterungskarte asynchron zur Steuerung betrieben werden. Zur Ankopplung der Erweiterungskarte dient ein Zugriffssteuerwerk, das Zugriffe auf den Speicher der Erweiterungskarte regelt. Zugriffe der Steuerung auf den Speicher führen zum asynchronen Setzen eines Flip-Flops und anschließendem synchronen Speichern in einem Eingangsregister des Zugriffssteuerwerks. Nach erfolgtem Speicherzugriff wird das Flip-Flop durch das Zugriffssteuerwerk wieder zurückgesetzt.

Der Erfindung liegt daher das Problem zugrunde, eine Schaltungsanordnung zur Signalübertragung zwischen zwei asynchronen Finite-State-Maschinen anzugeben, die die genannten Nachteile vermeidet und hinsichtlich der Leistung verbessert ist.

Zur Lösung dieses Problems ist bei einer Schaltungsanordnung der eingangs genannten Art erfindungsgemäß vorgesehen, dass das Signal von der sendenden Finite-State-Maschine über ein asynchrones Speicherelement und ein daran angeschlossenes synchrones Speicherelement an die empfangende Finite-State-Maschine übertragbar ist, die zum Übermitteln eines Rücksetzsignals an das asynchrone Speicherelement nach der Signalübertragung ausgebildet ist.

Die erfindungsgemäße Schaltungsanordnung weist den Vorteil auf, dass lediglich eine einzige Synchronisationsstufe erforderlich ist. Das Signal wird von der sendenden Finite-State-Maschine asynchron in einem Speicherelement gespeichert und gelangt über das synchrone Speicherelement an die empfangende Finite-State-Maschine. Dabei ist es von großem Vorteil, dass das Signal von der empfangenden Finite-State-Maschine sofort weiter verarbeitet werden kann, während das asynchrone Speicherelement durch ein von der empfangenden Finite-State-Maschine gesendetes Rücksetzsignal zurückgesetzt wird. Es ist lediglich eine einzige Synchronisationsstufe erforderlich, während der zweite Synchronisationsschritt unmittelbar von der empfangenden Finite-State-Maschine übernommen wird. Durch den Verzicht auf ein relativ aufwändiges Handshaking Verfahren wird ein Geschwindigkeitsvorteil erzielt. Die Signalübertragung kann bei der erfindungsgemäßen Schaltungsanordnung asynchron, das heißt unabhängig von den jeweiligen Taktfrequenzen erfolgen.

Eine noch größere Ausfällsicherheit wird erzielt, wenn in der empfangenden Finite-State-Maschine ein internes Register für das an das asynchrone Speicherelement zu übermittelnde Rücksetzsignal vorgesehen ist. Dadurch kann ein vorzeitiges Rücksetzen wirksam verhindert werden.

Zweckmäßig kann das asynchrone Speicherelement der erfindungsgemäßen Schalteranordnung vom Latch-Typ sein. Das Speicherdement kann daher wie bei einem Flip-Flop die Zustände "0" oder "1" aufweisen, zwischen denen umgeschaltet werden kann. Das Rücksetzen des Speicherelements erfolgt jeweils durch das von der empfangenden Finite-State-Maschine gesendete Rücksetzsignal.

Erfindungsgemäß kann das synchrone Speicherelement mit der Taktfrequenz der empfangenden Finite-State-Machine betreibbar sein. Dieses Speicherelement stellt die erste Synchronisationsstufe dar.

Es kann bei der erfindungsgemäßen Schaltungsanordnung das asynchrone Speicherelement mit der ersten oder der zweiten Taktfrequenz betrieben werden. Diese Schaltung eignet sich insbesondere zum Testen der Synchronisierung.

Darüber hinaus betrifft die Erfindung ein elektronisches Gerät, insbesondere Mobiltelefon, Personal Digital Assistant (PDA), GPS-System oder Navigationssystem, das eine Schaltungsanordnung der beschriebenen Art aufweist.

Weitere Vorteile und Einzelheiten der Erfindung ergeben sich aus den im Folgenden beschriebenen Ausführungsbeispielen sowie anhand der Zeichnungen. Die Zeichnungen sind schematische Darstellungen und zeigen:
- Fig. 1: eine erfindungsgemäße Schaltungsnordnung zur Signalübertragung zwischen zwei Finite-State-Maschinen mit unterschiedlichen Taktfrequenzen
- Fig. 2: eine Schaltungsanordnung bei der die Taktfrequenz des asynchronen Speicherelements umschaltbar ist;
- Fig. 3: den Signalverlauf bei der Synchronisation eines schnelleren Systems mit einem langsameren System; und
- Fig. 4: den Signalverlauf bei der Synchronisation eines langsameren Systems mit einem schnelleren System.

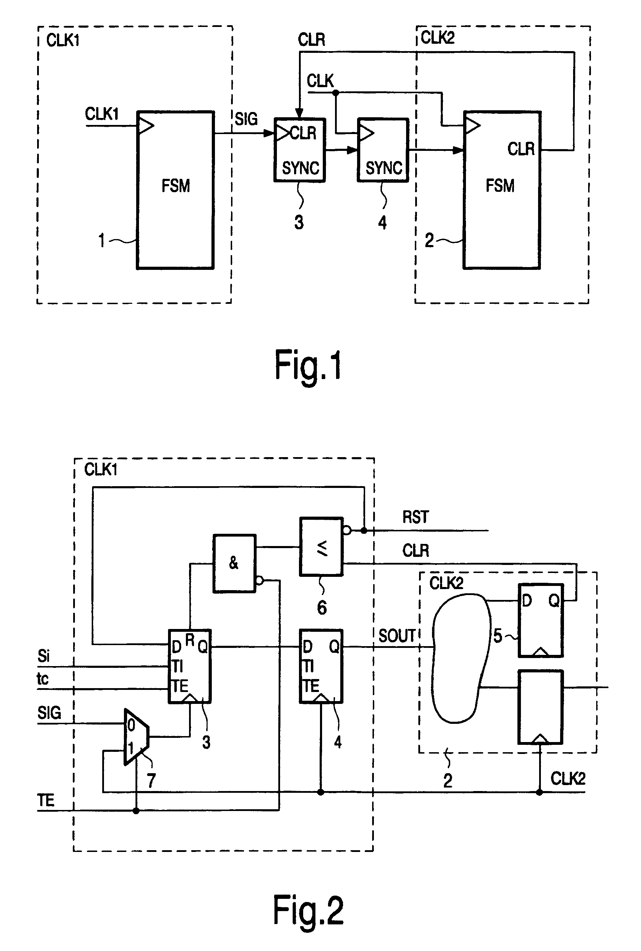

Die in Fig. 1 dargestellte Schaltungsanordnung umfasst eine erste Finite-State-Maschine (FSM) 1, die mit der Taktfrequenz CLK 1 betrieben wird. Der gesamte mit der Taktfrequenz CLK1 arbeitende Teil der Schaltungsanordnung ist durch die gestrichelte Linie auf der linken Seite von Fig. 1 gekennzeichnet.

Die Signalübertragung erfolgt von der ersten Finite-State-Maschine 1 an das asynchrone Speicherelement 3. Das Signal wird in dem asynchronen Speicherelement 3 gespeichert und gelangt von dort zu einem synchronen Speicherelement 4. Das synchrone Speicherelement 4 wird mit einer zweiten Taktfrequenz (CLK2) betrieben, die größer oder kleiner als die Taktfrequenz 1 sein kann. Das synchrone Speicherelement 4 und die Finite-State-Maschine 2 weisen die selbe Taktfrequenz (CLK2) auf, sie sind also miteinander synchronisiert. Derjenige Teil der Schaltungsanordnung, der mit der Taktfrequenz CLK2 läuft, ist durch die gestrichelte Umrahmung auf der rechten Seite von Fig. 1 gekennzeichnet.

Von dem synchronen Speicherelement 4 gelangt das Signal an die Finite-State-Maschine 2, die als zweiter Synchronisationsschritt dient. Das Signal kann in der Finite-State-Maschine 2 unmittelbar weiterverarbeitet werden, da kein zweiter externer Synchronisationsschritt erforderlich ist. Dadurch wird ein Zeitverlust durch ein Handshaking-Verfahren vermieden. Gleichzeitig sendet die Finite-State-Maschine 2 das Rücksetzsignal (CLR) an das asynchrone Speicherelement 3, das daraufhin zurückgesetzt wird. Nach dem Rücksetzen steht das asynchrone Speicherelement 3 wieder für eine Signalübertragung zur Verfügung.

Mit der in Fig. 1 dargestellten Schaltungsanordnung wird ein vollkommen asynchroner Betrieb ermöglicht, der unabhängig von den einzelnen Taktfrequenzen ist.

Fig. 2 zeigt ein Ausführungsbeispiel, bei dem die Taktfrequenz des asynchronen Speicherelements umschaltbar ist. Für identische Komponenten werde dieselben Bezugszeichen wie in Fig. 1 verwendet.

Das asynchrone Speicherelement 3 wird durch das Signal SIG einer in Fig. 2 nicht dargestellten Finite-State-Maschine angesteuert und umgeschaltet. Dieses Signal wird an das synchrone Speicherelement 4 weitergeleitet und dort synchronisiert, das Ausgangssignal SOUT des synchronen Speicherelements 4 wird an die Finite-State-Maschine 2 übertragen. Die Finite-State-Maschine 2 sendet das Rücksetzsignal CLR an das asynchrone Speicherelement 3, um dieses zurückzusetzen, wenn dessen Signal von der Finite-State-Maschine 2 erkannt worden ist. Die Finite-State-Maschine 2 weist ein Register 5 auf, das als Zwischenspeicher des Rücksetzsignals CLR dient und ein internes oder ein externes Register sein kann. Durch das Register 5 wird vermieden, dass das asynchrone Speicherelement 3 bei instabilen Zuständen vorzeitig zurückgesetzt wird. Die einzelnen Logikbausteine der Register müssen so gewählt werden, dass die dadurch verursachte Zeitverzögerung möglichst gering ist.

Um das asynchrone Speicherelement 3 nach einem Reset in einen bestimmten Zustand zu versetzten, ist das Signal RST über ein ODER-Gatter 6 mit dem Rücksetzsignal CLR verknüpft. Der Eingang D des asynchronen Speicherelements 3 ist mit dem Signal RST verbunden, um den Rücksetzzustand des asynchronen Speicherelements 3 überprüfen zu können.

Um die Synchronisation der Schaltungsanordnung zu testen, kann die Taktfrequenz des asynchronen Speicherelements 3 durch das Signal TE mittels des Gatters 7 auf die Taktfrequenz CLK 2 umgeschaltet werden.

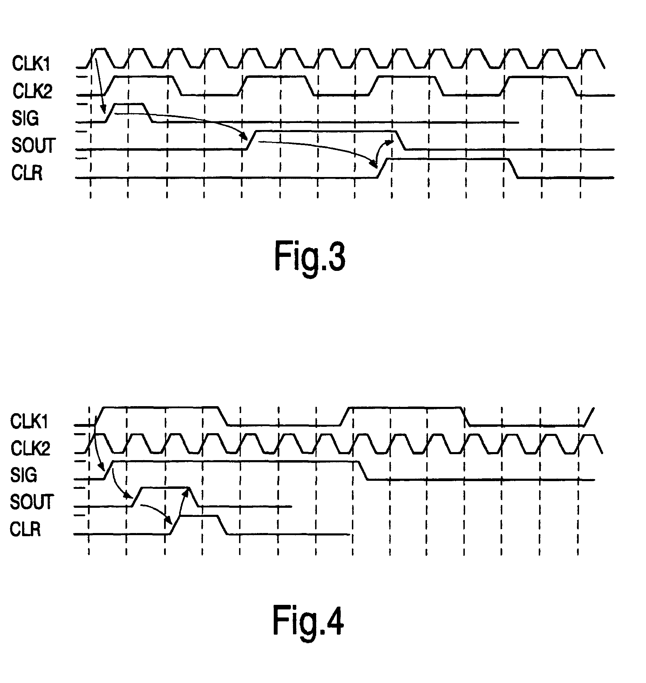

Fig. 3 zeigt den Signalverlauf bei der Synchronisation eines schnelleren Systems mit einem langsameren System. Die einzelnen Signalverläufe sind dabei über der Zeitachse aufgetragen. Wie in Fig. 3 zu erkennen ist, ist die in der ersten Zeile dargestellte Taktfrequenz CLK 1 der Finite-State-Maschine 1 größer als die in der zweiten Zeile dargestellte Taktfrequenz CLK 2 der Finite-State-Maschine 2. Die Signalübertragung wird von der Finite-State-Maschine 1 ausgelöst, die das in der dritten Zeile gezeigte Signal SIG über das asynchrone Speicherelement 3 an das synchrone Speicherelement 4 sendet. Das synchrone Speicherelement 4 arbeitet mit der Taktfrequenz CLK 2, sodass das in der vierten Zeile gezeigte Ausgangssignal SOUT des synchronen Speicherelements 4 mit der Taktfrequenz der Finite-State-Maschine FSM2 synchronisiert ist. Das Signal SOUT weist zu Beginn eines neuen Taktzyklus von CLK2 eine ansteigende Flanke auf. Dieses Signal gelangt an die Finite-State-Maschine 2, die wiederum beim Beginn des nächsten Taktzyklus von CLK2 das in der untersten Zeile von Fig. 3 dargestellte CLR-Signal zum Rücksetzen des asynchronen Speicherelements 3 sendet. Kurze Zeit später ist auch das Signal SOUT wieder zurückgesetzt.

Analog zeigt Fig. 4 den Signalverlauf bei der Synchronisation eines langsameren Systems mit einem schnelleren System. Bei diesem Ausführungsbeispiel ist die Taktfrequenz CLK1 geringer als die Taktfrequenz CLK2. Nach dem Auslösen des in der dritten Zeile gezeigten Signals SIG durch die Finite-State-Maschine 1 wird das Signal SIG umgeschaltet, was in der oben beschriebenen Weise nach dem Verstreichen einer gewissen Zeit zu einer ansteigenden Flanke des in Zeile 4 dargestellten Signals SOUT führt. Analog zu dem vorherigen Beispiel wird beim nächsten Takt durch die Finite-State-Maschine 2 das Rücksetzsignal CLR (unterste Zeile) ausgelöst und in der Folge das Signal SOUT wieder zurückgesetzt. Damit ist die Finite-State-Maschine 1 mit der langsameren Taktfrequenz CLK1 mit der schnelleren Finite-State-Maschine 2 synchronisiert.

Die beschriebene Schaltungsanordnung eignet sich insbesondere für Systeme, bei denen mehrere Taktfrequenzen benutzt werden wie Mobilfunkgeräte, Personal Digital Assistants (PDAs), GPS-Systeme, Kraftfahrzeugnavigationsgeräte und dergleichen.

## Patentansprüche

1. Schaltungsanordnung zur Signalübertragung von einer bei einer ersten Taktfrequenz (CLK1) betreibbaren Finite-State-Maschine zu einer bei einer zweiten Taktfrequenz (CLK2) betreibbaren Finite-State-Maschine,
wobei es sich um zwei Finite-State-Maschinen (1, 2) handelt, die asynchron betrieben werden,
wobei das Signal von der sendenden Finite-State-Maschine (1) über ein asynchrones Speicherelement (3) und ein daran angeschlossenes synchrones Speicherelement (4) an die empfangende Finite-State-Maschine (2) übertragbar ist, die zum Übermitteln eines Rücksetzsignals an das asynchrone Speicherelement (3) nach der Signalübertragung ausgebildet ist, wobei das synchrone Speicherelement (4) mit einer Taktfrequenz (CLK2) betreibbar ist, die grösser oder kleiner als die erste Taktfrequenz (CLK1) ist,
**dadurch gekennzeichnet,**
**dass** das asynchrone Speicherelement (3) mit einem Signal (SIG) der mit der ersten Taktfrequenz (CLK1) betreibbaren Finite-State-Maschine (1) oder durch die zweite Taktfrequenz (CLK2) ansteuerbar ist, wobei zum Testen der Schaltungsanordnung ein Gatter (7) vorhanden ist, um das asynchrone Speicherelement (3) auf die zweite Taktfrequenz (CLK2) umschalten zu können.

2. Schaltungsanordnung nach Anspruch 1,
**dadurch gekennzeichnet,**
**dass** in der empfangenden Finite-State-Maschine (2) ein internes Register (5) für das an das asynchrone Speicherelement (3) zu übermittelnde Rücksetzsignal (CLR) vorgesehen ist, wobei das Register (5) als Zwischenspeicher für das Rücksetzsignal (CLR) dient.

3. Schaltungsanordnung nach Anspruch 1 oder 2,
**dadurch gekennzeichnet,**
**dass** das asynchrone Speicherelement (3) vom Latch-Typ ist.

4. Schaltungsanordnung nach einem der vorangehenden Ansprüche,
**dadurch gekennzeichnet,**
**dass** das synchrone Speicherelement (4) mit der Taktfrequenz der empfangenden Finite-State-Maschine (2) betreibbar ist.

5. Elektronisches Gerät, insbesondere Mobiltelefon, Personal Digital Assistant (PDA), GPS-System oder Navigationssystem,
**dadurch gekennzeichnet,**
**dass** es eine Schaltungsanordnung nach einem der Ansprüche 1 bis 4 aufweist.

## Claims

1. A circuit configuration for signal transmission from a finite state machine that can be operated at a first clock rate (CLK1) to a finite state machine that can be operated at a second clock rate (CLK2),
wherein said two finite state machines (1, 2) are asynchronously operated,
wherein the signal from the transmitting finite state machine (1) can be transmitted through an asynchronous storage element (3) and a synchronous storage element (4) connected thereto to the receiving finite state machine (2), which is designed so as to transmit a reset signal to the asynchronous storage element (3) after the signal transmission, and
wherein the synchronous storage element (4) can be operated with a clock frequency (CLK2) that is higher or lower than the first clock frequency (CLK1),
**characterized in that** the asynchronous storage element (3) can be controlled by a signal (SIG) of the finite state machine (1) that is operable with the first clock frequency (CLK1) or by the second clock frequency (CLK2), while a gate (7) is present for testing the circuit configuration, said gate providing the possibility of switching the asynchronous storage element over to the second clock frequency (CLK2).

2. A circuit configuration as claimed in claim 1, **characterized in that** an internal register (5) is provided in the receiving finite state machine (2) for the reset signal that is to be transmitted to the asynchronous storage element (3), which register (5) serves as an intermediate storage element for the reset signal CLR).

3. A circuit configuration as claimed in claim 1 or 2, **characterized in that** the asynchronous storage element (3) is of the latch type.

4. A circuit configuration as claimed in any one of the preceding claims,
**characterized in that** the synchronous storage element (4) can be operated at the clock rate of the receiving finite state machine (2).

5. An electronic device, in particular a mobile telephone, Personal Digital Assistant (PDA), GPS system, or navigation system, **characterized in that** it comprises a circuit configuration as claimed in any one of the claims 1 to 4.

## Revendications

1. Circuit de transmission de signaux d'une machine à état fini fonctionnant à une première fréquence de rythme (CLK1) vers une deuxième machine à état fini fonctionnant à une deuxième fréquence de rythme (CLK2),
dans lequel il s'agit de deux machines à état fini (1, 2) qui fonctionnent de manière asynchrone,
dans lequel le signal peut être transmis par la machine à état fini (1) émettrice par l'intermédiaire d'un élément de mémoire (3) asynchrone et un élément de mémoire (4) synchrone raccordé à celui-ci à la machine à état fini réceptrice (2) qui est conçue pour la transmission d'un signal de réinitialisation à l'élément de mémoire asynchrone (3) après la transmission de signaux, l'élément de mémoire asynchrone (4) pouvant fonctionner à une fréquence de rythme (CLK2) qui est supérieure ou inférieure à la première fréquence de rythme (CLK1),
**caractérisé en ce**
**que** l'élément de mémoire asynchrone (3) peut être commandé avec un signal (SIG) de la machine à état fini (1) pouvant fonctionner à la première fréquence de rythme (CLK1) ou par la deuxième fréquence de rythme (CLK2), une grille (7) étant présente pour le test du circuit afin de pouvoir commuter l'élément de mémoire asynchrone (3) à la deuxième fréquence de rythme (CLK2).

2. Circuit selon la revendication 1,
**caractérisé en ce**
**qu'**il est prévu dans la machine à état fini (2) réceptrice un registre interne (5) pour le signal de réinitialisation (CLR) à transmettre à l'élément de mémoire asynchrone (3), le registre (R) servant de mémoire intermédiaire pour le signal de réinitialisation (CLR).

3. Circuit selon l'une des revendications 1 ou 2,
**caractérisé en ce**
**que** l'élément de mémoire asynchrone (3) est du type latch.

4. Circuit selon l'une des revendications précédentes,
**caractérisé en ce**
**que** l'élément de mémoire synchrone (4) peut fonctionner à la fréquence de rythme de la machine à état fini (2) réceptrice.

5. Appareil électronique, en particulier radiotéléphone mobile, Personal Digital Assistant (PDA), système GPS ou système de navigation,
**caractérisé en ce**
**qu'**il présente un circuit selon l'une des revendications 1 à 4.
